# EUROPEAN PATENT APPLICATION

(11) **EP 2 881 250 A1**
(43) Date of publication of application: **10.06.2015**
(21) Application number: 14196522.8
(22) Date of filing: 05.12.2014
(51) Int. Cl.: B32B 7/00, B32B 7/02, B32B 25/00, B32B 25/04, B32B 27/00, B32B 27/06, B32B 27/08, B32B 27/16, B32B 27/18, B32B 27/30, B32B 27/32, C08J 7/04, C08J 5/18

(54) **Mineral oil barrier film with high oxygen diffusion properties**

(30) Priority: 05.12.2013 US 201314098432
(71) Applicant: Toray, Plastics (America), Inc., North Kingstown, RI 02852 (US)
(72) Inventor: Fitch, John, Middletown, RI Rhode Island 02842 (US); Paolilli, Tracy, East Greenwich, RI Rhode Island 02818 (US); Hanks, Adam, West Warwick, RI Rhode Island 02893 (US)
(74) Representative: Zwicker, Jörk

(57) **Abstract**

A biaxially oriented polypropylene (BOPP) film with a novel coating layer which has an O2TR value in cc/m2/day in a range from 100 to 2000, and a MOSH value of 0.6 mg/kg or less is disclosed. This coating layer comprises a blend of additives that are approved for coatings for direct contact with food. In one embodiment, the coating layer comprises a poly-vinyl amine and a styrene butadiene resin emulsion.

## Description

### Field of Invention

This invention relates to a multi-layer biaxially oriented polypropylene (BOPP) film with a novel formulation which exhibits barrier to mineral oil and high oxygen diffusion. More particularly, the invention relates to a new film that has high oxygen diffusion but low diffusion to mineral oil (hydrocarbon) and moisture, i.e., having high moisture and hydrocarbon barrier.

### Background of Invention

Biaxially oriented polypropylene (BOPP) films used for food packaging, decorative, and label applications often perform multiple functions.

The food packaging industry has long been aware of possible contamination of foods by compounds present in the packaging. For this reason all food packaging are subject to the regulations of food health and safety laws. No undesirable compounds may migrate from the packaging into the food and as a result cause harm to the health of consumers, or reduce the quality of the food. In Europe, the migration of contaminants from packaging materials into food is regulated by an overall migration limit (OML), which refers to the total migrating material, and the specific migration limit (SML), which refers to individual authorized compounds that are able to migrate into food. The OML currently has a limit of 60 mg/kg of food. The German Federal Institute for Risk Assessment (BfR) set up requirements on food contact materials, including those for paper and board. These requirements include specifications on the types of raw materials, production aids, and specialty additives that are allowed to be used in paper or board that comes into direct contact with food.

A meeting of the BfR Paper and Cardboard Panel was held October 2009 to discuss a Swiss study on food packing materials. The Swiss study found cardboard boxes made from recycled paper can contain significant amounts of mineral oil. The mineral oil amounts found were between 300-1000 mg/kg. The main source of the mineral oil was from printing inks commonly found in newspapers. Additional sources were from inks used in food packaging printing. The mineral composition consisted of short chain hydrocarbons including a high amount of aromatic compounds, differentiated in paraffinic Mineral Oil Saturated Hydrocarbons (MOSH) and Mineral Oil Aromatic Hydrocarbons (MOAH). Some of these contaminants were found only in paper and board packages produced from recovered fiber and, therefore, have a high probability of migrating into the foodstuff. These contaminants would not necessarily be present in packaging produced from virgin fibers.

The presence of mineral oils in dry foodstuff was found to originate from the packaging materials, namely, paperboard manufactured from recovered fibers, and these oils subsequently migrate to the foodstuff via the vapor phase. The presence of mineral oils in food is of concern as it originates from the use of paper products not originally intended for food contact applications, i.e., before the paper is subjected to a suitable recycling process. These mineral oils consist of technical grade compounds which may contain aromatic compounds and other components with unknown toxicological effects. Although the related authorities are currently considering the safe and legal limits of these contaminants in foodstuffs, as well as establishing a standardized test method for monitoring mineral oils in food and packaging materials, paperboard manufacturers wish to ensure that their products are safe for food contact applications. Since recycling is unavoidable, particularly from an ecological and economical point of view, one of the proposed solutions the industry is focusing on is the use of a functional barrier towards mineral oils - be it an inner bag as a direct food-contact surface, or a barrier coating directly applied on the inner side of the paperboard.

Recent publications focused the attention of the paper, packaging and ink industries on the presence of mineral oils in food packaging and their migration into food in alarmingly high concentrations. No official method has yet been recognised by standardization authorities for measuring the mineral oil content in either packaging materials or foods, but at present the method of choice is that published by Dr K. Grob of the Official Food Control Authority of the Canton of Zurich (Switzerland) This method measures the absolute concentration of mineral oils in either food packaging or contaminated food. It involves the extraction of hydrocarbons with a solvent, followed by analysis via on-line high performance liquid chromatography-gas chromatography (HPLC-GC). This is a quite complex method that requires expensive equipment and highly knowledgeable operators.

Recycling is encouraged extensively since it constitutes an economic way of ensuring the sustainability of our natural resources, and also to limit levels of solid waste going into landfill. Food packaging is often made of recycled materials as this has a significant economic benefit regarding food costs. However, the recycling process also introduces a number of undesirable, and often unknown, compounds into the final packaging that may potentially migrate into the food. Plastic packaging made from recycled waste can be regulated to some extent, but this can be more difficult in the case of recovered paper and board. Recently, non-food grade hydrocarbons from mineral origin were found in paper packaging for food. It has also been found that these compounds are able to migrate into the food itself.

A comprehensive study of the composition of these compounds present in paper packaging, and consequently in the packed food, has not been carried out due to the very complex mixtures involved, and also due to frequent changes in the content of recovered pulp. But its mere presence is still alarming, since previous studies on animals have shown that organ damage could occur with the accumulation of significant quantities of these materials in the body. The BfR, which acts as a focal point between the European Food Safety Authority and the European Union federal ministries, was the first official organization to announce the recent findings. They declared that more research needs to be done on the composition of mineral oils present in recycled paper and board, as well as on the toxicological effects on human health. In the meantime, while the food and packaging industry are expectantly waiting for proper legislation, the BfR has emphasized the importance of reducing the migration of mineral oils into food.

Paper and board products used in direct food contact applications are well-known. These include baking papers, filters, sugar bags, teabags, butter wrapping, baked goods, cartons for dry (cereals like oats) and frozen foods, paper plates and cups. A large portion of paper and board packaging intended for food is utilized with a coating or laminate barrier layer, usually for liquid packaging like milk and beverages. In such cases the food is not in direct contact with the paper, but rather in contact with a plastic or aluminum foil inner layer.

There remains a need in the art for new and improved methods for multi-layer biaxially oriented polypropylene (BOPP) film that exhibits barrier to mineral oil and high oxygen diffusion.

### Summary of the Invention

An embodiment relates to a film comprising a polyolefin film and a coating layer, wherein the film has an O2TR value in cc/m2/day in a range from 100 to 2000, and a MOSH value of 0.6 mg/kg or less. Preferably, the polyolefin comprises polypropylene. Preferably, the polyolefin comprises polyethylene. Preferably, the polyolefin comprises a mixture of different polyolefins. Preferably, the film has a MOSH value of 0.4 mg/kg or less. Preferably, the film has a MOSH value of 0.25 mg/kg or less. Preferably, the coating layer only contains additives approved for coatings in direct contact with food. Preferably, the coating layer comprises a vinyl resin. Preferably, the coating layer comprises a styrene-containing material. Preferably, the coating comprises a vinyl resin and a styrene-containing material. Preferably, the coating layer comprises a poly-vinyl amine and a styrene butadiene resin emulsion. Preferably, the coating layer comprises a poly-vinyl alcohol and a styrene butadiene resin emulsion. Preferably, the coating layer comprises a poly-vinyl amine and a styrene acrylic emulsion. Preferably, the coating layer comprises a poly-vinyl alcohol and a styrene acrylic emulsion. Preferably, the polyolefin film comprises a multilayer polyolefin film. The film could further comprise an outermost skin layer comprising a corona treated tie-layer resin. The film could further comprise a heat seal layer. The film could further comprise a heat seal layer comprising three layers.

Another embodiment relates to a method of manufacturing of the film described above, comprising operating a sequential manufacturing under biaxially oriented polyethylene or biaxially oriented polypropylene film-making processing conditions and tentering temperatures.

Yet another embodiment relates to a method of manufacturing of the film described above, comprising operating a simultaneous orientation manufacturing line under biaxially oriented polyethylene or biaxially oriented polypropylene film-making processing conditions and tentering temperatures.

Additional advantages of this invention will become readily apparent to those skilled in the art from the following detailed description, wherein only the preferred embodiments of this invention is shown and described, simply by way of illustration of the best mode contemplated for carrying out this invention. As will be realized, this invention is capable of other and different embodiments, and its details are capable of modifications in various obvious respects, all without departing from this invention. Accordingly, the examples and description are to be regarded as illustrative in nature and not as restrictive.

### BRIEF DESCRIPTION OF DRAWINGS

(1) Figure 1 shows a cross-section of an embodiment of a laminate film having a clear barrier plastic (CBP) film, a coating layer and a heat seal layer.
(2) Figure 2 shows heptane transmission through 80G OPP film having a coating layer containing different coating additives.

### Detailed Description of the Invention

This invention solves the problem of hydrocarbons such as mineral oil migrating from paperboard containers to dry food or oils from food migrating to paperboard containers. One desirable solution is to use a laminate film as a food packaging material. The laminate film could contain a coating layer and an oriented polypropylene (OPP) film such that the laminate film has good oil and moisture resistance. The coating layer controls the flow of oxygen but at the same time retards the transmission of mineral oil. The OPP film could have an 02 transmission of 2300cc/M2/day, and with the applied coating layer the 02 transmission is ∼ 1000 cc/m2/day. A standard heat seal polymer could be applied on top of the coating layer. A secondary benefit of the coating layer is that it can act as an adhesion promoter for the extruded heat seal layer.

In one embodiment, this invention utilizes a coating layer comprising a polyinyl amine (PVAm) and a styrene butadiene resin (SBR) emulsion to create a coating that is a good barrier to mineral oils but allows enough oxygen to pass through to maintain the crispness of dry foodstuffs.

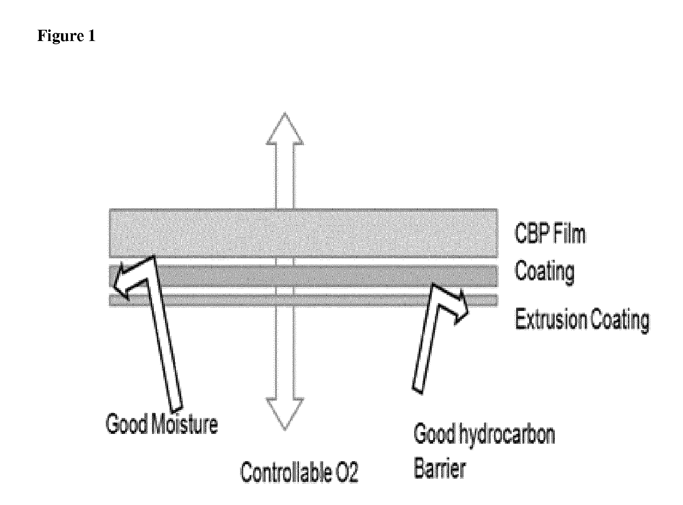

The OPP film alone has good moisture resistance and the barrier coating does not add or detract from the moisture barrier of the film. The heat seal layer that is extruded on top of the barrier coating is used in the bagmaking forming and sealing process Figure 1 illustrates this structure

In one embodiment of the invention, the laminate film comprises a two-layer film, preferably coextruded, of: a clear barrier plastic (CBP) film and a coating layer. In another embodiment, the laminate comprises a three-layer film, preferably coextruded, of: a clear barrier plastic (CBP) film, a coating layer and a heat seal layer, typically an extrusion coating layer, as shown in Figure 1, with the coating layer being interposed between the CBP film and the heat seal layer.

The CBP film could be a biaxially oriented polypropylene (BOPP) film which generally has good barrier to moisture and oil and is described in U.S. Patent No. 6726998, which is incorporated herein in its entirety by reference.

The coating layer comprises additives that promote oxygen transmission while reducing transmission of hydrocarbons such as mineral oil, food oils, vegetable oils, etc. The preferred additives in the coating layer include a poly-vinyl amine and a styrene butadiene resin emulsion. Both of these additives are FDA approved, so they can be used in coating layers for direct contact with food. SBR was also found to have a low heptane transmission rate. SBR in the coating layer permits enough oxygen to go through and at the same time prevents hydrocarbons such as mineral oil from going through the coating layer. The coating layer could include additives such hydrophilic colloids such as polyvinyl alcohol (PVOH), ethylene vinyl alcohol (EVOH) and PVAm to impart excellent oxygen barrier properties to the laminate film as described in U.S. Patent Nos. 7521103, 6911255, 6444750, which are incorporated herein in their entirety by reference. In a preferred embodiment, the coating layer could also include an SBR emulsion as an additive to PVAm coating to adjust the flow of oxygen. It is hypothesized that the SBR being acidic and PVAm being basic undergo a reaction where the SBR is dispersed into microscopic rubber spheres that create a tortouous path that slows but does not block the transmission of oxygen though the PVAm. Preferably, an SBR emulsion could be used in a coating layer for paper and paperboard coatings where a high degree of grease, oil and water resistance is needed.

In a typical configuration of a three-layer film, the CBP film is the top layer to the outside of the package. The coating layer is applied to one surface of the CBP film. Then a heat seal layer, typically, an extrusion coating layer, is applied on the coating layer. The food product is in contact with the heat seal layer. The coating layer is located between the heat seal layer and the CBP film.

The CBP film could be a polypropylene resin layer that contains a crystalline polypropylene of specific isotactic content and can be biaxially oriented. The CBP film can also be a multilayer coextruded polypropylene-based film of two or more layers, for example, comprising a core layer and at least one outer skin layer. The crystalline polypropylene can be a propylene homopolymer or a mini-random ethylene-propylene copolymer with a fractional ethylene content of less than 1 wt% of the polymer (preferably about 0.5-0.6 weight %). Crystalline polypropylenes are generally described as having an isotactic content of about 90% or greater. Suitable examples of crystalline polypropylenes for this invention are Total 3271 and Conoco Phillips PP CH020XK. These resins also have melt flow rates of about 1.6 - 2.0 g/10min, a melting point of about 157.3°C, a crystallization temperature of about 108 -126°C, a heat of fusion of about 98.2 J/g, a heat of crystallization of about 105 - 111 J/g, a C¹³ NMR isotactic pentad ratio of about 93%, a % heptane insolubles of about 95-96%, and a density of about 0.90 - 0.91. The CBP film could be 8 µm to 100 µm in thickness after biaxial orientation, preferably between 10 µm and 50 µm, and more preferably between 15 µm and 30 µm in thickness. A preferred embodiment is to use high crystalline propylene homopolymer such as Total 3270 to provide a higher modulus film and consequently, a stiffer film. This resin typically has an isotactic index of greater than 95%, preferably 98%, as measured by C¹³ NMR isotactic pentad ratio, and % heptane insolubles of 97% or greater, melt flow rate of nominal 2.0 g/10 minutes at 230°C, melting point of 163-167°C, a crystallization temperature of about 108 -126°C, a heat of fusion of about 86 - 110 J/g, a heat of crystallization of about 105 - 111 J/g, and a density of about 0.91.

The CBP film can also include an amount of hydrocarbon resin additive to further improve stiffness and provide some moisture barrier improvement. A preferred embodiment combines an amount of the hydrocarbon resin with a high crystalline propylene homopolymer, to produce a satisfactorily stiff BOPP film that is roughly 10% higher modulus and stiffness than an equivalent film made with a conventional crystallinity propylene homopolymer alone. The hydrocarbon resin also acts as a processing aid during biaxial orientation of the film by allowing a wider processing window in terms of stretching temperatures and motor torques for machine direction (MD) and particularly, transverse direction (TD) stretching, particularly when using a high crystalline propylene homopolymer. A suitable hydrocarbon resin is of the polydicyclopentadiene type available in masterbatch form from ExxonMobil as PA609A or PA610A, which are 50 wt% masterbatches of polypropylene carrier resin and 50 wt% polydicyclopentadiene. Suitable amounts of hydrocarbon masterbatch are concentrations of up to 20 wt% of the CBP film (i.e. up to 10 wt% active hydrocarbon resin component). Preferably, 20 wt% of the hydrocarbon resin masterbatch is used in conjunction with the high crystalline propylene homopolymer.

The CBP film can be surface treated on one side with an electrical corona-discharge treatment method, flame treatment, atmospheric plasma, or corona discharge in a controlled atmosphere of nitrogen, carbon dioxide, or a mixture thereof, with oxygen excluded and its presence minimized. The latter method of corona treatment in a controlled atmosphere of a mixture of nitrogen and carbon dioxide gases - to the exclusion of oxygen gas - is particularly preferred. This method results in a treated surface that comprises nitrogen-bearing functional groups. Preferably nitrogen-bearing functional groups are in an amount of at least 0.3 atomic% or more, and more preferably, at least 0.5 atomic% or more. This treated CBP film is then well suited for subsequent purposes of metallizing, printing, coating, or laminating.

It is often desirable to add an optional amount of antiblocking agent to the CBP film for aiding machinability and winding. An amount of an inorganic antiblock agent can be added in the amount of 100-1000 ppm of the CBP film, preferably 300-600 ppm. Preferred types of antiblock are spherical sodium aluminum calcium silicates or an amorphous silica of nominal 3 µm average particle diameter, but other suitable spherical inorganic antiblocks can be used including crosslinked silicone polymer or polymethylmethacrylate, and ranging in size from 2 µm to 6 µm. Migratory slip agents such as fatty amides and/or silicone oils can also be optionally employed in the CBP film either with or without the inorganic antiblocking additives to aid further with controlling coefficient of friction and web handling issues. Suitable types of fatty amides are those such as stearamide or erucamide and similar types, in amounts of 100-1000ppm of the core. Preferably, stearamide is used at 400-600ppm of the CBP film. Suitable silicone oil that can be used is a low molecular weight oil of 350 centistokes which blooms to the surface readily at a loading of 400-600ppm of the CBP film. However, if the films of this invention are desired to be used for metallizing or high definition process printing, it is recommended that the use of migratory slip additives be avoided in order to maintain metallized barrier properties and adhesion or to maintain high printing quality in terms of ink adhesion and reduced ink dot gain. In the case of multilayer coextruded CBP film embodiment, it is often desirable to use such optional antiblocking additives and/or slip agents in the CBP film's outermost layers for efficacious use of such additives.

One of the outermost layers of a multilayer CBP film could be a heat sealable skin layer, e.g., comprising substantially of a random propylene ethylene butene terpolymer such as Sumitomo PP SPX78R6, density 0.90 g/cc, MF 9.5 g/10 min, including an amount of Momentive Tospearl® 120 nominal 2.0 µm spherical crosslinked silicone polymer antiblock of about 4000 ppm loading. Migratory slip agents such as fatty amides or silicone oils can also be optionally added to the heat sealable layer of types and quantities mentioned previously if lower COF is desired.

In another embodiment, one (or more) of the outermost layers of the multilayer CBP film may be a non-heat sealable layer, comprised of a propylene-based homopolymer or mini-random ethylene-propylene copolymer as described previously. This layer can also comprise an amount of inorganic antiblock additives and/or slip agents for controlling coefficient of friction properties and to aid in web handling and winding. A preferable amount of antiblock is about 300 - 5000 ppm, and more preferably about 3000-4000ppm. Preferred types of antiblock are spherical sodium aluminum calcium silicates or amorphous silica of nominal 3 µm average particle diameter, but other suitable spherical inorganic antiblocks can be used including crosslinked silicone polymer or polymethylmethacrylate, and ranging in size from 2 µm to 6 µm. The side or surface of this outermost layer opposite the core layer may also be discharge-treated to increase the surface energy for suitability for laminating, coating, printing, or metallizing.

A preferred outer skin layer for the multilayer CBP film is to use a tie-layer resin that is suitable for receiving aqueous coatings such as the inventive formulation of PVAm and SBR, said tie-layer being comprised preferably of an anhydride-grafted polypropylene or ethylene-propylene copolymer or an ethylene-acrylic ester-maleic anhydride terpolymer. Popular maleic anhydride-grafted propylene homopolymers or copolymers are those produced by Mitsui Chemicals under the Admer® tradename such as grade QF500A with 0.12-0.15 wt% maleic anhydride, 3.0 g/10min melt flow rate at 230°C, and 143°C Vicat softening point. Other suitable maleic anhydride-grafted adhesion promoter resin grades are those such as DuPont Bynel® 3861 anhydride-grafted polypropylene, Mitsui Admer® QF551A, anhydride-grafted ethylene-propylene copolymer, and Admer® AT777A, anhydride-grafted polypropylene and EP copolymer without rubber contents. Besides anhydride-grafted polyolefins, ethylene polar terpolymers (e.g. ethylene-acrylic ester-maleic anhydride copolymers) such as Arkema's Lotader® resins have been used as a tie-layer. Suitable ethylene polar terpolymers for this tie-layer blend are such as those available from Arkema: Lotader 3210 or 4210 (an ethylene-butyl acrylate-maleic anhydride terpolymer) or Lotader AX8900 (an ethylene-methyl acrylate-glycidal methacrylate terpolymer). Lotader 3210 is a copolymer of about 91 wt% ethylene, 6 wt% butyl acrylate, and 3 wt% maleic anhydride; Lotader 4210 is about 90 wt% ethylene, 7 wt% butyl acrylate, and 3.6 wt% maleic anydride. It should be noted that Lotader 3210 and 4210 are not grafted maleic anhydride polymers like Mitsui's Admer QF551A or QF500A. Lotader AX8900 is a copolymer of about 67 wt% ethylene, 25 wt% methyl acrylate, and 8 wt% glycidal methacrylate. Preferably, the amount of the butyl or methyl acrylate co-monomer in the ethylene polar terpolymer should be about 25 wt% or less, more preferably 5-16 wt% of the terpolymer. For ease of processability in extrusion and orientation processes, the amount of a butyl or methyl acrylate co-monomer is preferably 1-10 wt% of the terpolymer, more preferably 5-8 wt% of the terpolymer. Of these low co-monomer content ethylene polar terpolymers, Lotader 4210 is particularly preferred for use in this mixed resin tie-layer blend for its combination of adhesion promoting properties and processability in extrusion.

Tie-layer blends comprising maleic anhydride-grafted propylene polymer-based resins or ethylene-acrylic acid-maleic anhydride terpolymers with propylene homopolymers or copolymers can be used wherein the amount of adhesion-promoting tie resin is preferentially in the range of 5-50 wt%, more preferably 10-40 wt%, and even more preferably 20-30 wt% of the tie-layer blend. In one embodiment, this tie-layer blended resin can comprise the core layer upon which the aqueous PVAm/SBR coating is applied; in another embodiment, this tie-layer blend formulation may be coextruded as a discrete layer on one side of a propylene polymer-based core layer substantially free of said tie resin blends. In this latter embodiment, the thickness of the discrete coextruded tie-layer blend after biaxial orientation is preferably 4.0G (1.0 µm). Additionally, an amount of inorganic antiblock may also comprise this tie-layer blend, optionally added up to 1000 ppm to this resin layer to aid in downstream film-handling and processing. Preferably 300-500 ppm of antiblock may be added. Suitable antiblock agents comprise those such as inorganic silicas, sodium calcium aluminosilicates, crosslinked silicone polymers such as polymethylsilsesquioxane, and polymethylmethacrylate spheres. Typical useful particle sizes of these antiblocks range from 1 - 12 um, preferably in the range of 2-6 um. These outer skin layers can be coextruded on one or both sides of the multilayer CBP core layer as desired, said layers having a thickness after biaxial orientation of between 0.1 and 5 µm, preferably between 0.5 and 3 µm, and more preferably between 1.0 and 2.0 µm. The CBP film thickness can be of any desired thickness after biaxial orientation, but preferred and useful thicknesses are in the range of 8 µm to 100 µm, preferably 10 µm to 50 µm, and even more preferably 15 µm - 30 µm. The coextrusion process includes a multi-layered compositing die, such as a two-, three-, or four-layer die. In the case of a 2-layer coextruded film, a two-layer compositing die can be used. In the case of a 3-layer coextruded film, the coating layer can be sandwiched between the heat sealable resin layer and the polymer CBP film using a three-layer compositing die.

The surfaces of these outer layers r can be surface-treated if desired with either a corona-discharge method, flame treatment, atmospheric plasma, or corona discharge in a controlled atmosphere of nitrogen, carbon dioxide, or a mixture thereof which excludes oxygen. The latter treatment method in a mixture of CO₂ and N₂ is preferred. This method of discharge treatment results in a treated surface that comprises nitrogen-bearing functional groups, preferably 0.3% or more nitrogen in atomic %, and more preferably 0.5% or more nitrogen in atomic %. This discharge-treated surface can then be metallized, printed, coated, or extrusion or adhesive laminated. Preferably, it is coated with the inventive coating formulation for mineral oil barrier. In this case where one of the outer layers is used for receiving the PVAm/SBR coating, this layer is comprised of a blended resin tie-layer that is surface-treated with either a corona-discharge method, flame treatment, atmospheric plasma, or corona discharge in a controlled atmosphere of nitrogen, carbon dioxide, or a mixture thereof prior to in-line coating with the PVAm/SBR. Preferred is a simple treatment using corona discharge in air. This "pretreatment" prior to in-line coating is useful in helping to further wet-out of the coating onto the tie-resin layer. It can then be coated with a layer of the EVOH/PVOH coating formulation.

### Test Methods

The various properties in the examples were measured by the following methods:

### A) Heptane Test

A test was developed that would be able to quickly screen chemistries that would be able to alter the O2TR of PVAm but not significantly affect the mineral oil transmission rate. The heptane test is described below.

10 grams of heptane was weighed in a Canning jar with a screw lid. The metal cap of the Canning jar was replaced with a test film and the metal rim of the Canning jar was screwed down to seal the Canning jar. The Canning jar containing 10 grams of heptane was weighed initially when the test film was screwed down to seal the Canning jar. Subsequently, the Canning jar, with the heptane therein and the test film screwed down to seal the Canning jar, was weighed every 24 hours.

### B) Fabes Test

The Fabes Test is a test for a 10 ppb screening and determination of migration of MOSH/MOAH compounds. MOSH refers to mineral oil saturated hydrocarbons: paraffins (open chain hydrocarbons) and naphthenes (cyclic hydrocarbons). The latter are mostly highly alkylated and originate either directly from mineral oil or are formed during refining by hydrogenation of aromatic rings or other conversion processes. MOAH refers to mineral oil aromatic hyrdocarbons: highly alkylated mono- and/or polyaromatic hydrocarbons from mineral oil. In partially hydrogenated mineral oils both, saturated and aromatic rings can be found. Hydrocarbons having at least one aromatic ring are considered as MOSH, even if they predominantly consist of saturated carbons. For the migration investigations the samples were placed into migration cells and covered with the food simulant Tenax. After storage of the samples at the time/temperature conditions of 10 days / 40°C, the simulant was eluted and the eluate worked-up. After addition of an alkane standard (Tridecane) the solutions were analyzed by means of gas chromatography coupled with a mass spectrometer (GC/MS) and by gas chromatography with flame ionisation detection (GC/FID). The substances were quantified semi quantitatively via the alkane standard.

The assessment of the migration of aliphatic and aromatic mineral oil components is performed by means of a method developed by FABES [Hauder, J., Benz, H., Rüter, M., Piringer, O. (2013): The specific diffusion behavior in paper and modeling from recycled board into dry foodstuffs; Food Addit Contam. 30(3): 599-611]. The percentage amount of aromatic compounds (MOAH) contained in the total amount of migrants was analyzed by GC-MS using certain fragment masses (m/z 50-52, 63-66, 75-78) in the lower mass range. For quantitative results, the total concentration of migrants was determined by GC-FID and the percentage MOAH result is referred to this total amount.

### Examples

This invention will be better understood with reference to the following Examples, which are intended to illustrate specific embodiments within the overall scope of the invention.

### A) Heptane Test Results

To test the quality the heptane transmission resistance of different coating layers, the Heptane Test on coated samples was performed. Many coating additives were screened with the Heptane Test method to find an additive that would provide a good barrier to hydrocarbon such as mineral oil. All coatings were applied on 80G OPP film. Coatings were applies with a # 4 rod at 20% solids. The dry coating weight was 2 gsm. A 60G polylactic acid (PLA) film was used as control. The different coatings tested are shown in Table 1:

**Table 1**

| **Sample #** | **Additive** | **Source** | **Brand** |
|---|---|---|---|
| | | | |
| 4C | Hydroxy Methyl Propyl Cellulose | Dow Chemical Co. | Methocel J12MS |
| 4G | Styrene Butadiene Resin Emulsion | Mallard Creek | Rovene 4019 |
| 4H | Styrene Acrylic Emulsion | Cork Industries | PC 94FDA |
| 5A | Stearylated Melamine/wax Emulsion | Solv Inc | Aquasize 914 |
| 5B | Polyester Emulsion | Evonik | DS 1300 |

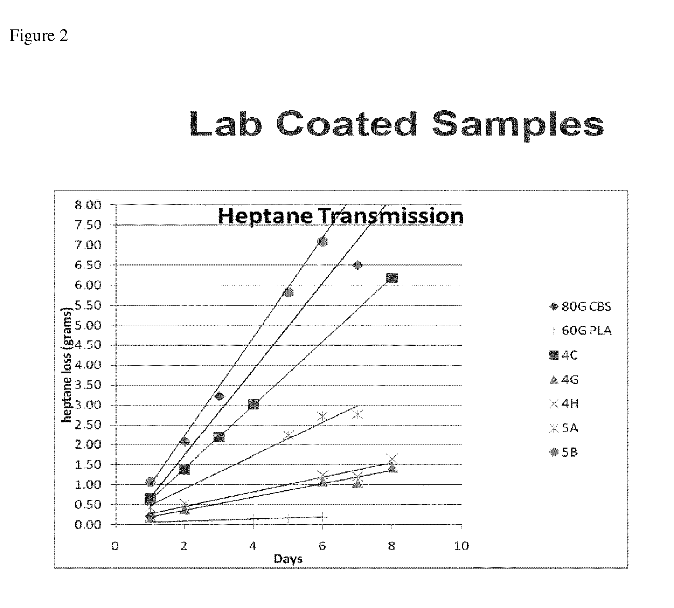

The results of the Heptane Test are shown in Figure 2. The legend 80G CBS and 60G PLA refer to bare films of 80G BOPP and 60G PLA. Based on the Heptane Test, the SBR emulsion (Rovene 4019) provided the greatest barrier resistance to heptane transmission. Thus, the SBR emulsion was chosen as an additive to a PVAm containing coating for a BOPP film to provide hydrocarbon transmission resistance to the BOPP film.

### B) Fabes Test Results

Example 1: A 3-layer CBP film was made using a 1.5m wide pilot line sequential orientation process. This CBP film structure comprised of: a core layer comprising of about 80 wt% Conoco Phillips PP CH020XK crystalline polypropylene and about 20 wt% of ExxonMobil PA609A hydrocarbon resin masterbatch; a first outermost skin layer on one side comprising of Mitsui Admer QF500A maleic-anhydride grafted polypropylene tie-layer resin with about 300ppm of nominal 3µm size spherical sodium calcium aluminum silicate antiblock; and a second outermost skin layer on the opposite side of the core layer, said second skin layer comprising a heat sealable layer comprising of Sumitomo SPX78R6 terpolymer with an amount of Momentive Tospearl® 120 nominal 2.0 µm spherical crosslinked silicone polymer antiblock of about 4000 ppm loading. The multilayer CBP film was made via coextrusion through a die, cast on a chill drum using an air knife pinner, oriented in the machine direction at about 4.75 times through a series of heated and differentially sped rolls, followed by transverse direction stretching in a tenter oven of about 8-10 times.

The multilayer coextruded laminate sheet was coextruded at processing temperatures of ca. 220°C to 250°C through a die and cast onto a cooling drum whose surface temperature was controlled between 21°C and 38°C to solidify the non-oriented laminate sheet at a casting speed of about 8-13 mpm. The non-oriented laminate sheet was preheated in the machine direction orienter at about 93°C to 113°C, stretched in the longitudinal direction at about 105°C to 113°C at a stretching ratio of about 4.75 times the original length and the resulting stretched sheet was annealed at about 24°C to 80°C to reduce heat shrinkage and to obtain a uniaxially oriented laminate sheet. The uniaxially oriented laminate sheet was introduced into a tenter at a line speed of ca. 24 to 40 mpm and preliminarily heated between about 145°C and 165°C, and stretched in the transverse direction at about 145°C to 165°C at a stretching ratio of about 8 times the original width and then heat-set or annealed at about 145°C to 165°C to reduce internal stresses due to the orientation and minimize shrinkage and give a relatively thermally stable biaxially oriented sheet.

The first outermost skin layer comprising the tie-layer resin was corona treated in-line between the machine and transverse direction orientation processes. An aqueous coating layer comprising of PVAm was applied onto the corona-treated tie-layer resin side of the CBP film by an in-line coating process placed between the machine and transverse orientation processes. The coating was applied via reverse gravure roll. The coating layer can be applied to the film either in an offline operation or in-line (as the film is being made). It would be applied to the skin side for increased adhesion of the coating offline or inline, the coating is applied with any suitable coating method - Mayer rod, direct/indirect gravure, roll, curtain, Flexo coating, etc. The preferred coating method is reverse gravure in-line. In the in-line method, the coating is applied after the Machine direction orientation (MDO). The coating layer provides adhesion properties for the heat seal layer as well as controlling the flow of air though the film and also provides a protective barrier from mineral oils that are present in recycled paperboard. Total solids and PVAm-SBR ratios are listed in Table 2.The coatings were applied with a 200 quad gravure cylinder at a web speed/gravure ratio of 1:1. The web speed was 600 FPM. The coating was dried in a 3 zone oven @ 160/170/170F.

After biaxial orientation, the thickness of the coextruded film overall was nominal 80G (20µm); the coating layer was nominal 1.5G (0.4µm); and the heat seal layer was nominal 6G (1.5µm). Main layer extruder output was adjusted to maintain finished film thickness as above after orientation as needed. The film was heat-set or annealed in the final zone of the tenter oven to reduce internal stresses and minimize heat shrinkage of the film and maintain a dimensionally stable biaxially oriented film. The BOPP multi-layer film was wound in roll form. The coated film is then extrusion coated with the heat seal layer.

### C) Extrusion coating Process

The heat seal layer is applied by a process that is known as Extrusion Coating. This is also an extrusion process similar to the extrusion of the OPP. This process involves extruding polyolefin resin from a slot die at temperatures up to 610°F directly onto the moving web which is the coated OPP film. A melt temperature was between 580 and 610 °F for the LDPE tie layer. The core and skin layers have melt temperatures in the 480 to 550 °F range. No primer or any pretreatment was used so as not to damage the coating. This extruder resin is applied to the coated side of the web which has been previously applied by an inline or offline process. This coated layer enhances adhesion, decreases the mineral oil barrier and controls the flow of air though the film. The heat seal polyolefin layers then passed through a nip consisting of a rubber covered pressure roller and a chrome-plated cooling roll. The latter cools the molten film back into the solid state and also imparts the desired finish to the plastic surface. The coating thickness is dependent on the web speed and the slot gap. The web is normally run much faster than the speed at which the resin is extruded from the die which controls the thickness of this heat seal layer.

### D) Heat seal layer description (3 layers)

1^{st} layer (Sealant/Tie layer) - LDPE; 20 gauge, 2.87 lb/ream, Chevron Marflex 1017
2^{nd} layer (core layer) - LDPE/PP blend (80%/20%); 60 gauge, 8.47 lb/ream; PP is Pinnacle Polymers PP 1512, LDPE is Chevron Marflex 1017.
3^{rd} layer (skin layer) - mLLDPE/PP/LDPE (80%/14%/5.8%); 20 gauge, 2.82 lb/ream; mLLDPE is DOW Affinity PT 1450G1, PP is Pinnacle Polymers PP 1512.

The core layer could be as thin as 30 gauge (4.23 lb/ream) and the skin layer could be up to 80% mLLDPE/15.6% PP/4.4% LDPE.

Example 2-6: Example 1 was repeated except that the coating layer composition was as shown in Table 2 below.

**Table 2**

| **Sample #** | **PVAm 14% solids** | **PVOH** | **Water** | **SBR 52% solids** | **Total solids** | **Coating weight (lbs /ream)** |
|---|---|---|---|---|---|---|
| 1 | 100 | 0 | 0 | 0 | 14 | .4 |
| 2 | 100 | 0 | 0 | 0 | 14 | .6 |
| 3 | 30 | 0 | 57 | 13 | 11 | .4 |
| 4 | 11 | 0 | 70 | 19 | 11.5 | .4 |
| 5 | 0 | 0 | 79 | 21 | 11 | .4 |
| 6 | 0 | 10 | 68 | 22 | 12.8 | .4 |

| | | | | | | |
|---|---|---|---|---|---|---|
| SBR obtained from Mallard Creek of brand name Rovene 4019 PVAm obtained from Sekisui of brand name Ultiloc 5003BRS PVOH obtained from Celenese of brand name Celvol 24-203 | | | | | | |

Samples 1 to 6 were tested according to the Fabes Test and the results are summarized in Table 3.

**Table 3**

| **Sample #** | **Coating** | **O2TR Cc/m2/day** | **Aliphatics mg/kg** |
|---|---|---|---|
| 1 | PVAm | 10.5 | 0 |
| 2 | PVAm | 12.0 | 0 |
| 3 | PVAm/SBR (1:1.6) | 1113 | .114 |
| 4 | PVAm/SBR (1:6.4) | 1070 | .193 |
| 5 | SBR | 1113 | .212 |
| 6 | PVOH/SBR (1:9) | 1141 | .227 |
| 80G BOPP film | None | 2300 | .195 |

Table 3 shows a comparison between of the 02 transmission and the migration of mineral oil using the Fabes Test. Samples 1 and 2 had very low values for both aliphatic transmission and low O2TR. The low O2TR would not be suitable for food packaging in a bag-in-box application. Sample 3 has the preferred formulation, though all of Samples 306 would be acceptable. The oxygen is in an acceptable range while the aliphatic transmission in Sample 3 is the lowest of the samples tested. The uncoated 80G BOPP film, which is the base substrate of Samples 1 to 6, had an acceptable aliphatic transmission, but a higher O2TR value than that of Samples 1 to 6. Samples 1 to 6 and the uncoated 80G BOPP passed the European Union proposed limit for MOSH of 0.6 mg/kg.

## Claims

1. A film comprising a polyolefin film and a coating layer, wherein the film has an O2TR value in cc/m2/day in a range from 100 to 2000, and a MOSH value of 0.6 mg/kg or less.

2. The film of claim 1, wherein the polyolefin comprises polypropylene and/or. polyethylene.

3. The film of claim 1 or 2, wherein the polyolefin comprises a mixture of different polyolefins.

4. The film of any of claims 1 to 3, wherein the film has a MOSH value of 0.4 mg/kg or less, preferably of 0.25 mg/kg or less.

5. The film of any of claims 1 to 4, wherein the coating layer only contains additives approved for coatings in direct contact with food.

6. The film of any of claims 1 to 5, wherein the coating layer comprises a vinyl resin.

7. The film of any of claims 1 to 6, wherein the coating layer comprises a styrene-containing material.

8. The film of any of claims 1 to 7, wherein the coating comprises a vinyl resin and a styrene-containing material.

9. The film of any of claims 1 to 8, wherein the coating layer comprises a polyvinyl amine and a styrene butadiene resin emulsion.

10. The film of any of claims 1 to 9, wherein the coating layer comprises a polyvinyl alcohol and a styrene butadiene resin emulsion.

11. The film of any of claims 1 to 10, wherein the coating layer comprises a polyvinyl amine and a styrene acrylic emulsion.

12. The film of any of claims 1 to 11, wherein the coating layer comprises a polyvinyl alcohol and a styrene acrylic emulsion.

13. The film of any of claims 1 to 12, wherein the polyolefin film comprises a multilayer polyolefin film.

14. The film of any of claims 1 to 13, further comprising an outermost skin layer comprising a corona treated tie-layer resin.

15. The film of any of claims 1 to 14, further comprising a heat seal layer.

16. The film of any of claims 1 to 15, further comprising a heat seal layer comprising three layers.

17. A method of manufacturing of the film of any of claims 1 to 16, comprising operating a sequential manufacturing under biaxially oriented polyethylene or biaxially oriented polypropylene film-making processing conditions and tentering temperatures.

18. A method of manufacturing of the film of any of claims 1 to 16, comprising operating a simultaneous orientation manufacturing line under biaxially oriented polyethylene or biaxially oriented polypropylene film-making processing conditions and tentering temperatures.
